# EUROPÄISCHE PATENTANMELDUNG

(11) **EP 1 424 361 A1**
(43) Veröffentlichungstag der Anmeldung: **02.06.2004**
(21) Anmeldenummer: 03026509.4
(22) Anmeldetag: 19.11.2003
(51) Int. Cl.: C08L 77/00

(54) **Verwendung von Polykondensatmischungen zur Herstellung von Formteilen mit verbesserter Hydrolysebeständigkeit**

(30) Priorität: 26.11.2002 DE 10255043
(71) Anmelder: Bayer Aktiengesellschaft, 51368 Leverkusen (DE)
(72) Erfinder: Braig, Thomas, Dr., 40476 Düsseldorf (DE); Joachimi, Detlev, Dr., 47800 Krefeld (DE); Persigehl, Peter, Dr., 40878 Ratingen (DE); Frederik, Thoma, 47475 Kamp-Lintfort (DE)

(57) **Zusammenfassung**

Die Erfindung betrifft die Herstellung von hydrolysestabilen Formkörpem aus Polykondensaten.

## Beschreibung

Die Erfindung betrifft die Herstellung von hydrolysestabilen Formkörpern aus Polykondensaten.

Technische Thermoplaste wie Polyamide und Polyester werden für verschiedenste Einsatzgebiete angewendet, da sie interessante mechanische und elektrische Eigenschaften, Langlebigkeit und chemische Beständigkeit in Kombination mit hoher Designfreiheit aufweisen. Bei einigen dieser Anwendungen werden allerdings Anforderungen an die Beständigkeit gegen Chemikalien bei erhöhten Temperaturen gestellt, die nicht ausreichend erfüllt werden können. So werden Polyamide, insbesondere mit Glasfasern verstärktes Polyamid 66, z.B. im Kfz-Kühlkreislauf eingesetzt, wo durch Kontakt mit Kühlmedium (beispielsweise Ethylenglykol/Wasser 1/1) bei Temperaturen über 100°C eine merkliche Verschlechterung der mechanischen Eigenschaften, insbesondere der Zähigkeit, verursacht wird. Polyester, z.B. Polybutylenterephthalat, werden hingegen in Anwendungen, z.B. als Ummantelung für Lichtwellenleiter oder sicherheitsrelevante Steckverbindungen, eingesetzt, wo die durch Kontakt mit Feuchtigkeit bei erhöhter Temperatur auftretende Versprödung des Materials kritisch ist. In diesen und ähnlichen Fällen besteht also ein Bedarf an Verbesserung der Beständigkeit der betreffenden Materialien gegen die entsprechenden Medien, im folgenden der Einfachheit halber als "Hydrolysebeständigkeit" bezeichnet. Dabei sollten die sonstigen Eigenschaften der Materialien, insbesondere mechanische und elektrische Eigenschaften, Wärmeformbeständigkeit und auch die Verarbeitbarkeit z.B. im Spritzgießverfahren, möglichst nicht beeinträchtigt werden.

Die Hydrolysebeständigkeit des im Kfz-Kühlkreislauf üblicherweise eingesetzten glasfaserverstärkten Polyamid 66 gegen Kühlmedium lässt sich durch Einbau aromatischer oder/und hydrophober Strukturen erhöhen, wobei diese Art der Modifizierung mit Nachteilen bei Verarbeitbarkeit und Kosten einhergeht.

Eine gewisse Verbesserung der Hydrolysebeständigkeit von glasfaserverstärktem PA66 lässt sich auch über Optimierung der Kristallinität durch Nukleierungsmittel und durch Verwendung spezieller Glasfasern erzielen, die einige Glasfaserhersteller in ihrem Sortiment haben. Alle genannten Maßnahmen haben allerdings gravierende technische oder kostenmäßige Nachteile oder aber fuhren nur zu einer unzureichenden Verbesserung der Hydrolysebeständigkeit.

Im Falle der Polyester, insbesondere des Polybutylenterephthalats (PBT), ist es möglich durch Minimierung der Konzentration an reaktiven Endgruppen und durch Einsatz bestimmter Katalysatoren und Stabilisatoren, die Hydrolysebeständigkeit in gewissem Maße zu verbessern. Auch hier werden aber durch steigende Anforderungen in verschiedenen Anwendungsgebieten neue technische Lösungen erforderlich.

Polyolefine weisen zwar eine recht gute Beständigkeit gegen Wasser auf, werden aber bei hohen Temperaturen relativ stark durch Thermooxidation geschädigt und können auch wegen ihrer geringen Wärmeformbeständigkeit bzw. der starken Kriechneigung bei erhöhten Temperaturen nur bedingt z.B. für Heißwasserrohre eingesetzt werden. Deutlich besser eignen sich für derartige Anwendungen Rohre, bei denen die Polymermatrix nach der Formgebung vernetzt wird. Im Falle von Polyethylen sind hierfür z.B. folgende Verfahren beschrieben, bzw. großtechnisch etabliert:

### - Vernetzung Siloxan-Gruppen haltiger Polyolefine mittels Wasser:

Polyolefine, insbesondere Polyethylen, können durch Umsetzung mit geeigneten Alkoxyalkenylsilanen im Rahmen einer Graft-Reaktion so modifiziert werden, dass die Polyolefinketten nach der Modifizierung mit Alkoxysilangruppen versehen sind. Diese Alkoxysilangruppen reagieren bei Kontakt mit Wasser miteinander unter Abspaltung von Alkoholen und führen zur Vernetzung der Polymerketten. Für die Graftreaktion ist ein Radikalinitiator nötig, die Vernetzungsreaktion wird durch einen Katalysator beschleunigt. Das Verfahren wird z.B. in EP-A 0 426 073, US-A 3 646 155 und US-A 4117195 beschrieben. Nachteilig wirken sich hier insbesondere die hohen Kosten für die Graftkomponenten und den Vernetzungskatalysator aus.

### - Chemische Vernetzung durch Radikalinitiatoren:

Die Vernetzung erfolgt bei dieser Methode durch Zuführung thermischer Energie, d.h. im geschmolzenen Zustand. Der thermisch induzierte Zerfall des Radikalinitiators bewirkt die Bildung von Polymerkettenradikalen. Durch Rekombination zweier Polymerradikale wird die Vernetzung realisiert. Ein starker Viskositätsanstieg der Schmelze ist die Folge.

### - Vernetzung von Polyolefinen durch Bestrahlung :

Bei der Strahlenvernetzung von Polyolefinen, die heutzutage bereits großtechnisch eingesetzt wird (Handelsbeziechnung z.B. X-PE), sind zwei unterschiedliche Ausführungsformen zu unterschieden. Bei der ersten wird das Polyolefin ohne den Zusatz weiterer Additve dadurch vernetzt, dass die energiereiche Strahlung zu C-H-Bindungsbrüchen führt. Die Rekombination zweier Kohlenstoffradikale führt zur Vernetzung. Problematisch bei dieser Ausführungsform ist die geringe Selektivität und die Gefahr, dass auch C-C-Bindungen gebrochen werden können. Die geringe Selektivität führt außerdem dazu, dass zum Erreichen eines für technische Anwendungen ausreichenden Vernetzungsgrades hohe Strahlungsintensitäten eingesetzt werden müssen.

Selektiver erfolgt die Vernetzung, wenn zusätzlich reaktive, ungesättigte Komponenten mit in die Polyolefin-Formmasse eingebaut werden. Bei Bestrahlung erfolgt eine Polymerisation der ungesättigten Gruppen und dadurch eine Vernetzung. Die verschiedenen Ausführungsformen werden z.B. beschrieben in A. Bhattachary, *Progress in Polymer Science* **25,** 373 (2000).

Die Strahlenvernetzung mit Betastrahlen wird auch für bestimmte spezielle Anwendungsfälle bei Polyestern und Polyamiden eingesetzt. Die strahlenvemetzbaren Strukturbestandteile werden hierbei entweder in die Polymerkette eingebaut, z.B. im Falle von PBT über den Einsatz von ungesättigten Dicarbonsäuren und/oder Diolen (EP-A 0 559 072) oder Butendiol (EP-A 0 679 689), oder durch eincompoundierbare Additive in die Formmasse eingebracht, z.B. Eincompoundieren von Triallylisocyanurat in PA66, beschrieben in JP-A 2002146068. Die Vernetzung führt allerdings nur bei ganz spezifischen Eigenschaften zu Verbesserungen, beschrieben z.B in K.Ueno, *Radiat. Phys. Chem.* **35,** 129 f (1990). So ist z.B. die Verbesserung der Wärmeformbeständigkeit von strahlenvernetztem PA6 und PBT mit üblichen Prüfmethoden wie HDT (ISO 75), Vicat oder Zugversuch bei erhöhter Temperatur nicht nachweisbar, wohl aber mit dem "Lötspitzentest", bei dem eine auf die Prüftemperatur erhitzte Lötkolbenspitze des Durchmessers 1 mm mit einer definierten Kraft auf einen Prüfkörper aus den entsprechenden vernetzten Formmassen einwirkt. Als Ergebnis wird die Temperatur angegeben, bei der die Spitze exakt 0,1 mm tief in das Material eindringt. Hierbei weisen Platten aus strahlenvernetztem Polyamid oder Polyester gegenüber den unvernetzten Analoga einen deutlichen Vorteil auf, es werden je nach der Dosis der Bestrahlung um bis zu 80°C höhere Eindringtemperaturen im Vergleich zu nichtbestrahlten Vergleichsproben gemessen. Dieses Verhalten bewirkt, dass strahlenvemetzte Polyamide und Polyester z.B. im Bereich von Lötanwendungen kurzzeitig Temperaturen ausgesetzt werden können, die oberhalb des Schmelzpunktes des unvernetzten Materials liegen.

Überraschend wurde gefunden, dass die Elektronenstrahlvernetzung trotz der nur marginalen Verbesserung der Wärmeformbeständigkeit bei Polyamiden und Polyestern, insbesondere bei PA6, PA66 und PBT sowie entsprechenden Co-Polyamiden und Blends mit anderen Polymeren, zu einer signifikanten Verbesserung der Hydrolysebeständigkeit und hierbei insbesondere der Zähigkeit nach hydrolytischem Angriff führt.

Gegenstand ist daher die Verwendung von Formmassen zur Herstellung von hydrolysestabilen Formkörpern, wobei die Formmassen ein zur Vernetzung fähiges Additiv und/oder ein thermoplastisches, olefinisch ungesättigtes Polykondensat enthalten und die Formkörper nach der Formgebung mit energiereicher Strahlung wie zum Beispiel Beta-, Gamma-, Röntgen-, UV- oder Elektronenstrahlung behandelt werden.

Gegenstand der Erfindung ist daher die Verwendung von Formmassen zur Herstellung von hydrolysestabilen Formteilen, wobei die Formmassen die folgenden Komponenten enthalten:
A) thermoplastisches Polykondensat
B) Verstärkungsstoffe
C) vernetzungsfähiges Additiv
D) weitere polymere Komponenten
E) Additive, Zusatzstoffe, Verarbeitungshilfmittel
   und deren Polymermatrix im Anschluss an die thermoplastische Formgebung mit Beta-, Gamma-, Röntgen-, UV- oder Elektronenstrahlung, vorzugsweise mit Betastrahlen der Energie 10 bis 2000 kGy bestrahlt werden und dadurch bevorzugt zumindest teilweise vernetzt werden.

Als **Komponente A** enthalten die Zusammensetzungen erfindungsgemäß mindestens ein thermoplastisches Polykondensat wie beispielsweise Polyoxymethylenpolymerisate, Polyimide, Polyetherketone, Polycarbonat, Polyamide, Polyester, thermoplastische Polyurethane. Bevorzugt enthalten die Zusammensetzungen als Komponente A mindestens ein Polykondensat aus der Gruppe der Polycarbonate, Polyamide wie beispielsweise Polyamid 6 oder Polyamid 6,6, Polyester wie beispielsweise Polyalkylenterephthalate, z.B. Polybutylenterephthalat oder Polyethylenterephthalat. Erfindungsgemäß können bevorzugt auch eine Mischung aus zwei oder mehreren Polykondensaten als Komponente A eingesetzt werden. Besonders bevorzugt sind Mischungen die Polycarbonat, Polyamide und Polyester umfassen, wie beispielsweise Polycarbonat/Polybutylenterephthalat-Blends, Polybutylenterephthalat / Polyethylenterephthalat-Blends, Polycarbonat / Polyethylenterephthalat-Blends oder Polyamid / Polyalkylenterephthalat-Blends

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Polyamid 4,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6,6 und Polyamid-6 und ihre Mischungen, wobei Polyamid 6,6 ganz besonders bevorzugt ist.

Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl, 3,5,5,-trimethylcyclohexylamin, 2,5- und/oder 2,6-Bis-(aminomethyl)-norboman und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie Aminocapronsäure, Aminoundecansäure oder Aminolaurinsäure oder ihren Lactamen, hergestellt werden.

Die beschriebenen Polyamide können zudem mittels geeigneter Reagenzien verzweigt bzw. ihre Polymerketten entsprechend verlängert sein. Als Verzweiger bzw. Kettenverlängerer kommen niedermolekulare und oligomere Verbindungen in Frage, die über mindestens zwei reaktive Gruppen verfügen, die mit primären und/oder sekundären Aminogruppen, und/oder Amidgruppen und/oder Carbonsäuregruppen reagieren können. Reaktive Gruppen können z.B. Isocyanate, ggf. blockiert, Epoxide, Maleinsäureanhydrid, Oxazoline, Oxazine, Oxazolone, u.ä. sein. Bevorzugt sind Diepoxide auf Basis Diglycidylether (Bisphenol und Epichlorhydrin), auf Basis Aminepoxidharz (Anilin und Epichlorhydrin), auf Basis Diglycidylester (cycloaliphatische Dicarbonsäuren und Epichlorhydrin) einzeln oder in Mischungen sowie 2,2-Bis[p-hydroxy-pheny]1-propan-diglycidylether, Bis-[p-(N-methyl-N-2,3-epoxypropylamino)-phenyl]-methan. Besonders bevorzugt sind Glycidylether, ganz besonders bevorzugt BisphenolA-Diglycidylether.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Ebenfalls bevorzugt können als Komponente A teilaromatische Polyester eingesetzt werden. Die erfindungsgemäßen teilaromatischen Polyester sind ausgewählt aus der Gruppe Derivate der Polyalkylenterephthalate, bevorzugt ausgewählt aus der Gruppe der Polyethylentherephthalate, der Polytrimethylenterephthalate und der Polybutylenterephthalate, besonders bevorzugt der Polybutylenterephthalat und Polyethylenterephthalat, ganz besonders bevorzugt des Polybutylenterephthalats.

Unter teilaromatischen Polyestern versteht man Materialien, die neben aromatischen Molekülteilen auch aliphatische Molekülteile enthalten

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol-1,4-Reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,3 cm³/g bis 1,5 cm³/g, vorzugsweise 0,4 cm³/g bis 1,3 cm³/g, besonders bevorzugt 0,5 bis 1,0 jeweils gemessen in Phenol/o-Dichlorbenzol (1:1 Gew.-Teile) bei 25°C.

Die erfindungsgemäß hergestellten Polyester können auch im Gemisch mit anderen Polyestern und/oder weiteren Polymeren eingesetzt werden.

Den Polyestern können übliche Additive wie z.B. Entformungsmittel, Stabilisatoren und/oder Fließhilfsmittel in der Schmelze zugemischt oder auf der Oberfläche aufgebracht werden.

In einer ebenfalls bevorzugten Ausführung kann Komponente A) auch sogenannte ungesättigte Polyester umfassen, die auf Basis mindestens eines Monomeren, welches mindestens eine olefinische Doppelbindung als Substituent oder in der Hauptkette enthält. Die erfindungsgemäßen Monomere mit mindestens einer olefinischen Doppelbindung können beispielsweise ausgewählt sein aus der Gruppe olefinisch ungesättigter Diole, Dicarbonsäuren, Dicarbonsäureester, anderer Dicarbonsäurederivate und/oder aus der Gruppe von Diolen, Dicarbonsäuren, Dicarbonsäureestern oder anderen Dicarbonsäurederivaten, die dadurch gekennzeichnet sind, dass sie mindestens einen olefinisch ungesättigten Substituenten, wie z.B. Vinyl, Allyl, Butenyl, Alkenyl, Cycloalkenyl, enthält.

Geeignete olefinische Doppelbindungen enthaltende Diole sind beispielsweise 2-Buten-1,4-diol, 2-Penten-1,5-diol, 2-Hexen-1,6-diol, 3-Hexen-1,6-diol, 3-Octen-1,8-diol, 4-Octen-1,8-diol, beliebige andere Alkendiole, Alkdiendiole, Alktriendiole, oder Cycloalkendiole wie beispielsweise 2-Cyclohexen-1,4-diol wie sie beispielsweise in EP-B 06797689 oder in EP-A 0 559 072 beschrieben sind. Dicarbonsäuren, die olefinische Doppelbindungen enthalten, sowie deren Umsetzung zu ungesättigten Polyestern sind beispielsweise in EP-A 0 559 072 genannt, wie z.B. 3-Hexen-1,6-dicarbonsäure, 3-Octen-1,8-dicarbonsäure und/oder deren entsprechenden Derivate wie beispielsweise Methylester. Beispiele für Diole und Dicarbonsäuren und deren Derivaten mit olefinisch ungesättigten Substituenten sind Styrol-2,5-diol oder 2-Vinylterephthalsäure.

In Spezialfall des Einsatzes von erfindungsgemäßen ungesättigten Polyestern kann auf Komponente C) auch verzichtet werden.
Dies gilt allgemein für den Fall, dass olefinisch ungesättigte, thermoplastische Polykondensate als Komponente A eingesetzt werden. Als olefinisch ungesättigte thermoplastische Polykondensate sind solche Polykondensate zu verstehen, die olefinische Doppelbindungen in der Haupt- und/oder Seitenkette enthalten. Bevorzugt sind in diesem Zusammenhang neben den oben beschriebenen ungesättigten Polyestern auch Polyamide, die als Monomerbausteine olefinisch ungesättigte Diamine und/oder olefinisch ungesättigte Dicarbonsäuren enthalten.

Ebenfalls bevorzugt können als Komponente A erfindungsgemäß Polycarbonate oder eine Mischung von Polycarbonaten eingesetzt werden.

Bevorzugte Polycarbonate sind solche Homopolycarbonate und Copolycarbonate auf Basis der Bisphenole der allgemeinen Formel (I),

HO-Z-OH (I)

worin
- Z: ein divalenter organischen Rest mit 6 bis 30 C-Atomen ist, der eine oder mehrere aromatische Gruppen enthält.

Bevorzugt sind Bisphenole der Formel (Ia) 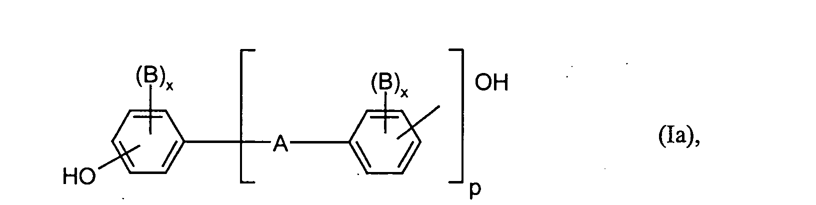 wobei
- A: eine Einfachbindung, C₁-C₅-Alkylen, C₂-C₅-Alkyliden, C₅-C₆-Cycloalkyliden, -O-, -SO-, -CO-, -S-, -SO2-, C6-C12-Arylen, an das weitere aromatische gegebenenfalls Heteroatome enthaltende Ringe kondensiert sein können,
oder ein Rest der Formel (II) oder (III) 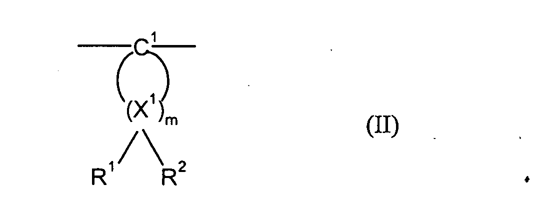 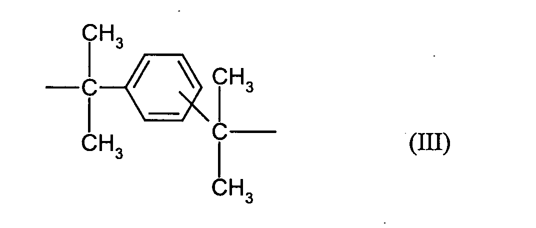
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4-hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenylethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α,'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Die erfindungsgemäß geeigneten Polycarbonate haben bevorzugt ein Gewichtsmittel der molaren Masse (Mw), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol. Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen. Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und (α,α',α"-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Den Polycarbonaten könne übliche Additive wie z.B. Entformungsmittel, Stabilisatoren und/oder Fließhilfsmittel in der Schmelze zugemischt oder auf der Oberfläche aufgebracht werden. Bevorzugt enthalten die verwendeten Polycarbonate bereits Entformungsmittel wie beispielsweise Pentaerithritoltetrastearat vor Compoundierung mit den anderen Komponenten der erfindungsgemäßen Formmassen.

Als Komponente A können erfindungsgemäß ausdrücklich auch Kombinationen aus verschiedenen Thermoplasten eingesetzt werden wie beispielsweise bevorzugt PC/Polyalkylenterephthalat, PC/PBT, PC/PET, PBT/PA, PET/PA, PBT/PS, PET/PS, PA/PS. Besonders bevorzugt sind die Mischungen PC/Polyalkylenterephthalat wie PC/PBT und PC/PET. Am meisten bevorzugt sind Mischungen aus PC/Polyalkylenterephthalat wie PC/PBT und PC/PET bei denen das Gewichts-Verhältnis PC : Polyalkylenterephthalat im Bereich 3:1 bis 1:3, bevorzugt im Bereich 1:1 bis 1:2,5 liegt.

Als **Verstärkungsstoffe B)** für die erfindungsgemäßen Formmassen werden handelsübliche Glasfasern, Kohlefasern, Mineralfasern, Füllstoffe mit oder ohne Oberflächenbehandlung, einzeln oder in Mischungen verwendet.

Als faser- oder teilchenförmige Verstärkungs- bzw. Füllstoffe seien Kohlenstofffasern, Glasfasern, Glaskugeln, Glasflakes, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 40 % eingesetzt werden.

Als bevorzugte faserförmige Verstärkungsstoffe seien Kohlenstofffasem, Aramid-Fasem und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Verstärkungsstoffe können zur besseren Verträglichkeit mit dem Thermoplasten mit Oberflächenmodifikatoren, z.B. Silanverbindungen vorbehandelt sein.

Geeignete Silanverbindungen sind solche der allgemeinen Formel (III)

(X-(CH₂)ₙ)ₖ-Si-(O-CₘH₂ₘ₊₁)₂₋ₖ (III)

in der die Substituenten folgende Bedeutung haben:
- x: 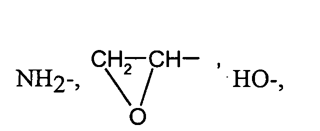
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1.

Bevorzugte Silanverbindungen sind Aminopropyltrimethoxysilan, Aminobutyltrimethoxysilan, Aminopropyltriethoxysilan, Aminobutyltriethosysilan sowie die entsprechenden Silane, welche als Substituent X eine Glycidylgruppe enthalten.

Die Silanverbindungen werden im Allgemeinen in Mengen von 0,05 bis 5, vorzugsweise 0,5 bis 1,5 und insbesondere 0,8 bis 1 Gew.-% (bezogen auf D) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8:1 bis 35:1, bevorzugt von 8:1 bis 11:1, auf. Der mineralische Füllstoff kann gegebenenfalls mit den vorstehend genannten Silanverbindungen vorbehandelt sein; die Vorbehandlung ist jedoch nicht unbedingt erforderlich. Prinzipiell können aber auch Wollastonite mit geringerem Aspektverhältnis eingesetzt werden.

Als weitere Füllstoffe seien Kaolin, calciniertes Kaolin, Talkum und Kreide genannt.

Als **Komponente C)** werden Zusammensetzungen verwendet, die bei Bestrahlung die Vernetzung der Formmassen herbeiführen. Diese - weiterhin Vernetzungsadditive genannten - Zusammensetzungen sind dadurch charakterisiert, dass sie Verbindungen mit mindestens einem Rest der Gruppe definiert durch die Formeln I bis IV enthalten,

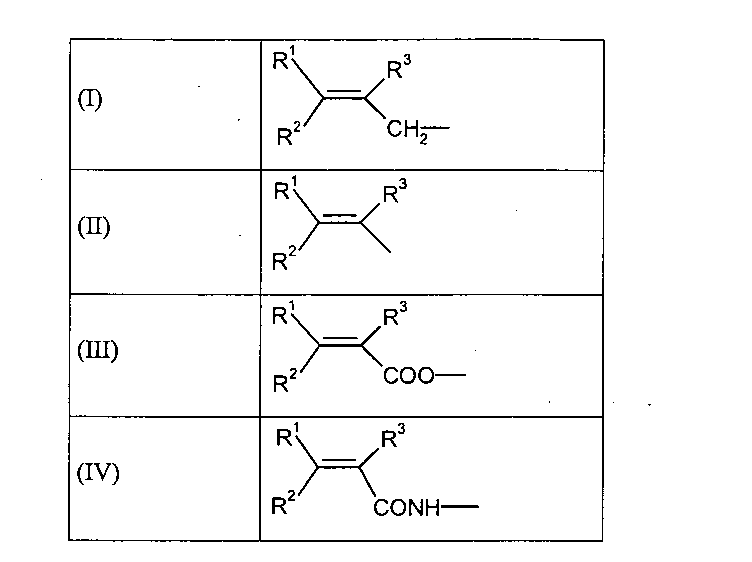

wobei R¹, R² und R³ unabhängig von einander ausgewählt sind aus der Gruppe Wasserstoffatom und Alkylrest mit 1 bis 6 Kohlenstoffatomen, und zusätzlich Verbindungen definiert durch die Formeln V und VI enthalten können,

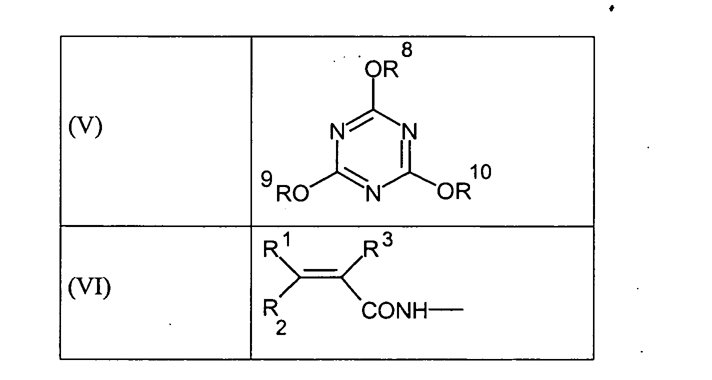

wobei R⁸, R⁹ und R¹⁰ unabhängig von einander ausgewählt sind aus der Gruppe Wasserstoffatom, Alkylrest mit 1 bis 10 Kohlenstoffatomen, Hydroxyalkylrest mit 1 bis 10 Kohlenstoffatomen, Carboxyalkylrest mit 1 bis 10 Kohlenstoffatomen und halogenierten Alkylrest mit 1 bis 10 Kohlenstoffatomen. Die Gruppen R¹ bis R¹⁰ können ggf. auch weitere funktionelle Gruppen und / oder Mehrfachbindungen enthalten.

Insbesondere können als Vernetzungsadditiv Verbindungen eingesetzt werden, die durch die Formeln VII bis X charakterisiert sind,

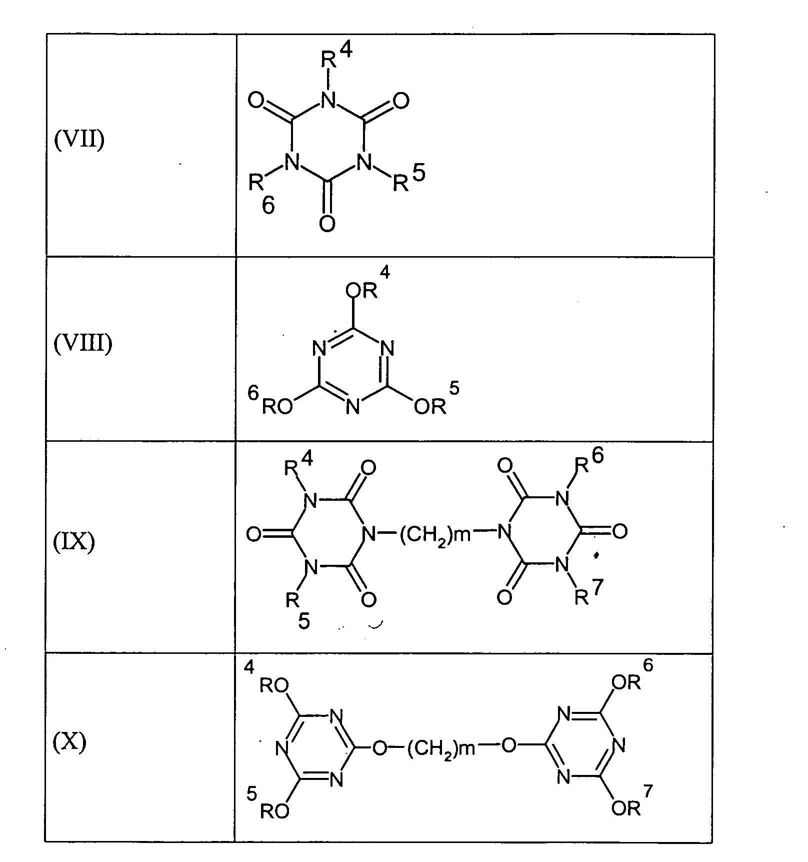

wobei mindestens ein Vertreter von R⁴, R⁵ und R⁶ in den Formeln VII und VII und mindestens ein Vertreter von R⁴, R⁵, R⁶ und R⁷ in den Formeln IX und X jeweils unabhängig von einander ein Rest der oben definierten Strukturen I und II ist und die verbleibenden Reste R⁴, R⁵, R⁶ und R⁷ in den Strukturen VII bis X jeweils unabhängig von einander ausgewählt sind aus der Gruppe Wasserstoffatom, Alkylrest mit 1 bis 10 Kohlenstoffatomen, Hydroxyalkylrest mit 1 bis 10 Kohlenstoffatomen, Carboxyalkylrest mit 1 bis 10 Kohlenstoffatomen und halogenierten Alkylrest mit 1 bis 10 Kohlenstoffatomen.

Bevorzugte Verbindungen entsprechend der Formeln VII bis X sind Triallylcyanurat, Diallylmethylcyanurat, Polyethylenallycyanurat, Triallylisocyanurat, Diallylmethylisocyanurat, polyethylenallyisocyanurat, Ethylen-bis-(diallylcyanurat), Tetramethylen-bis-(diallylcyanurat), Ethylen-bis-(diallylisocyanurat), Tetramethylen-bis-(diallylisocyanurat), Diallylhydroxy-ethylcyanurat, Diallylhydroxyethylisocyanurat, Diallylcarboethoxycyanurat, Diallylcarboethoxy-isocyanurat, Diallylchloroethylcyanurat und Diallylchloroethylisocyanurat. Besonders bevorzugt sind Triallylcyanurat und Triallylisocyanurat.

Weiterhin können die Vernetzungsadditive Verbindungen enthaltend Reste der Struktur I und II aus der Gruppe der Dicarbonsäurediallylester, wie zum Beispiel Diallylmalonat. Diallylsuccinat, Diallylglutarat, Diallyladipat und Diallylazelat sowie aus der Gruppe der Allyl substituierten Melamine wie zum Beispiel N,N-Diallylmelamin, Hexaallylhydroxy-methylmelamin, Hexaallylmelamin unnd Triallylmelamin sein.

Außerdem können die Vernetzungsadditive Verbindungen enthaltend Radikale der Struktur III und IV aus der Gruppe der Acrylsäureester, wie zum Beispiel Methylacrylat, Ethylacrylat, Butylacrylat und Hexylacrylat, aus der Gruppe der Methacrylsäureester, wie zum Beispiel Methylmethacrylat, Ethylmethacrylat und 2-Hydroxyethylmethacrylat, aus der Gruppe der Polyethylenglycolester von Acrylsäure und Methacrylsäure, sowie aus der Gruppe der Acrylsäure- und Methacrylsäureamide, wie zum Beispiel Acrylamid und Methycrlamid sein.

Weiterhin können die Vemetzungsadditive Verbindungen definiert durch die Formeln V und VI enthalten, dabei sind bevorzugt Cyanursäure, Isocyanursäure, Triethylcyanursäure, Triethylsiocyanursäure, Tris-(hydroxyethyl)cyanursäure, Tris-(hydroxyethyl)isocyanursäure, Tris-(carboxyethyl)cyanursäure, Tris-(carboxyethyl)-isocyanursäure, Tris-(chloroethyl)-cyanursäure und Tris-(chloroethyl)isocyanursäure.

Die beschriebenen Vernetzungsadditive können in reiner Form oder eingearbeitet in eine Themoplastmatrix eingesetzt werden. Als Thermoplasten zur Einarbeitung des Vernetzungsadditivs eignen sich die erfindungsgemäß eingesetzten Thermoplasten, insbesondere Polyamid 6, Polyamid 66, Polybutylenterephthalat, Polypropylen sowie Polyethylen.

Die beschriebenen Vernetzungsadditive werden in Mengen zwischen 0,1-20 %, bevorzugt zwischen 0,2-15 %, besonders bevorzugt zwischen 0,5-10 %, ganz besonders bevorzugt zwischen 2-4 % Vernetzungshilfsmittel jeweils bezogen auf das reine Vernetzungsadditiv eingesetzt.

Als weitere polymere **Komponenten D)** können die Formmassen kautschukelastische Polymerisate enthalten, die die Schlagzähigkeit der Formmassen erhöhen.

Bei den kautschukelastischen Polymerisaten handelt es sich allgemein um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Meth-acrylsäureester mit 1 bis 18 C-Atomen in der Alkoholkomponente.

Derartige Polymere werden z.B. in Houben-Weyl, Methoden der organischen Chemie, Bd. 14/1 (Georg-Thime-Verlag, stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und -octa-1,4-dien, cyclische Diene wie Cyclopentadien, Cyclohexadiene, Cyclooctadiene und Dicyclopentadien sowie Alkenylnorbornene wie 5-Ehtyliden-2-norbornen, 5-Butyliden-2-norbornen, 2-Methallyl-5-norbornen, 2-Isopropenyl-5-norbornen und Tricyclo-diene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Katuschuke können vorzugsweise auch mit reaktiven Carbonsäuren oder deren Derivaten getropft sein. Hier seien z.B. Acrylsäure, Methacrylsäue und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxygruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln (I) oder (II) oder (III) oder (IV) zum Monomerengemisch in den Kautschuk eingebaut

R¹C(COOR²)=C(COOR³)R⁴ (I)

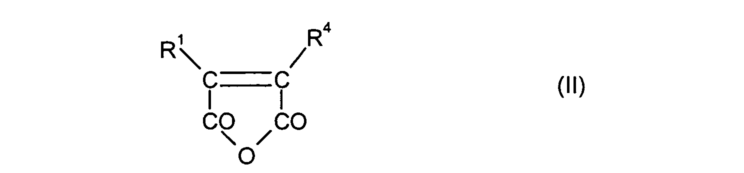

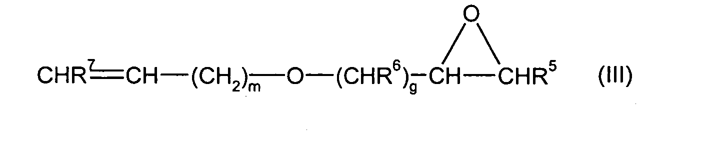

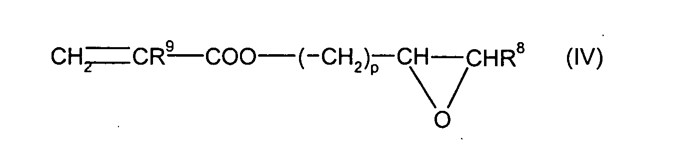

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln (I), (II) und (IV) sind Maleinsäure, Maleinsäureanhydrid und Epoxygruppen enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monmeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt.

Diese Monomeren können mit weiteren Monomeren wie z.B. Styrol, Acrylnitril, Vinylethern und weiteren Acrylaten oder Metacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im Allgemeinen durch Polymerisation von Styrol, Acrylnitril, Methacrylnitril, α-Methylstyrol, p-Methylstyrol, Acrylsäureestern und Methacrylsäureestem wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen die durch Mitverwendung von Monomeren der allgemeinen Formel 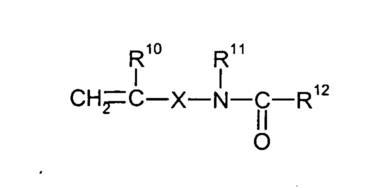 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆- bis C₁₂-Arylengruppe oder 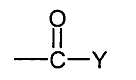
- Y: O-Z oder NH-Z und
- Z: eine C₁- bis C₁₀-Alkylen- oder C₆- bis C₁₂-Arylengruppe.

Auch die in der P-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer, für nähere Einzelheiten sei hier beispielsweise auf die US-A 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| **Typ** | **Monomere für den Kern** | **Monomere für die Hülle** |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur® s (ehemals Ultrablend® S der BASF AG) erhältlich. ABS/ASA-Mischungen mit Polycarbonaten sind unter dem Warenzeichen Terblend® (BASF AG) im Handel erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymeriesate mit einem inneren Kern aus n-Butylacrylat ode auf Butandienbasis und einer äußeren Hülle aus den vorstehend genannten Copoylmeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Bevorzugt sind weiterhin Zusammensetzungen, die zwei oder mehr Thermoplaste enthalten, wobei ggf. Verträglichkeitsvermittler eingesetzt werden können.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, sogenannte UV-Stabilisatoren, Gleit- und Entformungsmittel, Färbemittel wie Farbstoffe und Pigmente, Keimbildungsmittel, Weichmacher usw. enthalten. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können z.B. Bariumsulfat, Natriumphenylphosphinat, Aluminiumoxid, Siliziumdioxid sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäruen mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäure-dibenzylester, Phthalsäurebutylbenzylester, Kohlenwasserstofföle, N-(n-Butyl)benzolsulfonamid genannt.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die Herstellung der Formmassen für die erfindungsgemäßen Formteile erfolgt nach an sich bekannten Verfahren z.B. auf Einwellen- oder Zweiwellen-Extrudern bzw. -Knetern. Die Masse-Temperatur richtet sich nach den verwendeten Thermoplasten und liegt zwischen 220°C und 350°C. Nach der Extrusion wird das Extrudat abgekühlt und zu Granulat zerkleinert.

Die Vernetzungsadditive können in reiner Form oder eingearbeitet in eine Thermoplastmatrix während der Herstellung der Formmasse zugegeben werden oder nach der Herstellung der Formmassen mit den zerkleinerten Formmassen nach an sich bekannten Verfahren physikalisch vermischt werden (Dryblend).

Aus den so erhaltenen Formmassen oder dem Gemisch aus der Formasse und dem Vernetzungsadditiv lassen sich Formkörper oder flächige Gebilde wie Folien oder Platten herstellen. Die Formkörper können blockartig sein oder Hohlkörper mit verschiedenen Wandstärken. Zur Herstellung der Formkörper und flächigen Gebilde können z.B. bekannte Verfahren wie Gießen, Walzen, Blasformen, Saugblasformen, Plattenextrusion oder vorzugsweise Spritzgießen angewandt werden. Mehrere der so hergestellten Formkörpern können über bekannte Verfahren z.B. Vibrationsschweißen, Heizelementschweißen oder Laserschweißen miteinander zu neuen Formkörpern verbunden werden.

Erfindungsgemäß werden die Formkörper oder Halbzeuge nach deren Herstellung durch ionisierende Strahlung wie beispielsweise Röntgen-, Elektronen-, Gammaoder Beta-Strahlung vemetzt. Für diesen Arbeitsgang werden beispielsweise marktübliche Quellen für beta- oder gamma-Strahlen eingesetzt. So können als Beta-Strahlenquelle beispielsweise van der Graaf-Generatoren mit Strahlungsenergien mit einer Leistung von 150 keV bis 5 MeV und als gamma-Strahlenquellen beispielsweise Co⁶⁰- bzw. Cs¹³⁷-Präparate mit hoher Strahlungsleistung verwendet werden. Die erforderliche Dosis für die eingestrahlte ionisierende Strahlung liegt oberhalb von 10 bis maximal bei 2000 kGy, besonders im Bereich 100 bis 1500 kGy und insbesondere im Bereich 300 bis 1000 kGy. Die Energie wird dabei umso höher gewählt, je größer die durch die Wandstärke des Formteils bedingte gewünschte Eindringtiefe in das Formteil ist.

Die Gesamtbestrahlungszeit liegt zwischen 1 s und 60 s, bevorzugt 5 bis 30 s. Die Formkörper oder flächigen Gebilde können dabei ununterbrochen bestrahlt oder mehrmals für kürzere Zeit bestrahlt werden bis die gewünschte Gesamtbestrahlungszeit erreicht ist. Mit Elektronenstrahlen können üblicherweise Teile bis zu einer Dicke von etwa 20 cm, bevorzugt 10 cm vernetzt werden. Dies entspricht bei beidseitiger Bestrahlung einer Eindringtiefe von ca. 10 bzw. 5 cm.

Mit Gammastrahlen werden Eindringtiefen von mehreren Metern erreicht, so dass die dicke der zu vernetzenden Teile praktisch keiner Einschränkung unterliegt. Die Bestrahlungszeiten bei Gammastrahlung liegen zwischen etwa 0,1 bis ca. 100 Stunden, bevorzugt von ca. 1 bis ca. 20 Stunden.

Erfindungsgemäß können die Formteile im Anschluß an die Strahlenvernetzung bei Temperaturen im Bereich von 40 bis 350°C, bevorzugt im Bereich von 80 bis 300°C, besonders bevorzugt im Bereich von 100 bis 250°C noch für 2 bis 180 Minuten, bevorzugt für 5 bis 100 Minuten besonders bevorzugt für 10 bis 60 Minuten gelagert werden.

Weiterer Gegenstand der Anmeldung sind:

Verwendung von Formmassen zur Herstellung von hydrolysestabilen Formteilen, wobei die Formmassen die folgenden Komponenten enthalten
A) thermoplastisches Polykondensat
B) Verstärkungsstoffe
C) vernetzungsfähiges Additiv
D) weitere polymere Komponenten
E) Additive, Zusatzstoffe, Verarbeitungshilfmittel
und deren Polymermatrix im Anschluss an die thermoplastische Formgebung mit Beta-, Gamma-, Röntgen-, UV- oder Elektronenstrahlung, vorzugsweise mit Betastrahlen der Energie 10-2000 kGy bestrahlt werden und dadurch zumindest teilweise vernetzt werden.

Verwendung wobei die Formmassen enthalten:
A) 30 - 99,9 % thermoplastisches Polykondensat
B) 0-60% Verstärkungsstoffe
C) 0,1 - 20 % Vernetzungshilfsmittel
D) 0 - 30 % weitere polymere Zusatzstoffe
E) 0 - 15 % Zusatzstoffe und/oder Verarbeitungshilfsmittel.

Verwendung gemäß einem oder mehreren der vorangegangenen Ansprüche, wobei als Komponente C) 0,1-20 %, bevorzugt 0,2-15 %, besonders bevorzugt 0,5-10 % und ganz besonders bevorzugt 2-4 % Vernetzungshilfsmittel jeweils bezogen auf das reine Vernetzungsadditiv eingesetzt werden.

Verwendung dadurch gekennzeichnet, dass als thermoplastisches Polymer A) Polyamid oder Mischungen aus verschiedenen Polyamiden eingesetzt werden.

Verwendung dadurch gekennzeichnet, dass als thermoplastisches Polymer Polyester oder Mischungen aus verschiedenen Polyestern eingesetzt werden.

Verwendung dadurch gekennzeichnet, dass als Vernetzungshilfsmitteln Verbindungen enthaltend ungesättigte Gruppen, bevorzugt Allyl- und/oder VinylGruppen eingesetzt werden.

Weiterer Gegenstand sind die erfindungsgemäßen Formkörper.

Weiterer Gegenstand sind Verwendung der Formkörper als medienführendes System, wobei als Medium bevorzugt Kühlmittel auf Wasser und/oder Ethylenglycol-Basis zu verstehen sind und als medienführendes System bevorzugt Behältnisse und Leitungen zu verstehen sind.

Verwendung der Formkörper als Kühlmittelleitungen, Kühlerwasserkästen, Kühlmittelausgleichsbehälter, Pumpengehäuse, Pumpenlaufräder und Kühlwasserverteiler sowie Thermostatgehäuse.

Verwendung der Formkörper als medienführendes System, wobei als Medium Öl, bevorzugt Motoröl und Getriebeöl verstehen sind und als medienführendes System bevorzugt Behältnisse und Leitungen zu verstehen sind.

Verfahren zur Herstellung von hydrolysestabilen Formkörpern, dadurch gekennzeichnet, dass der Formkörper nach der Formgebung Beta-, Gamma-, Röntgen-, UVoder Elektronenstrahlung ausgesetzt wird.

Weiterer Gegenstand der Anmeldung ist:

Anwendung der Formkörper Ansprüche als Kühlmittelleitungen, Kühlerwasserkästen, Kühlmittelausgleichsbehälter, Pumpengehäuse, Pumpenlaufräder und Kühlwasserverteiler sowie Thermostatgehäuse.

Anwendung der Formkörper als medienführendes System, wobei als Medium Öl, insbesondere Motoröl und Getriebeöl verstehen sind und als System insbesondere Behältnisse und Leitungen zu verstehen sind.

Verfahren zur Herstellung von hydrolysestabilen Formkörpern, dadurch gekennzeichnet dass der Formkörper nach der Formgebung Beta-, Gamma-, Röntgen-, UV- oder Elektronenstrahlung ausgesetzt wird.

Verfahren zur Herstellung von hydrolysestabilen Formkörpern, dadurch gekennzeichnet, dass der Formkörper unmittelbar nach der Formgebung bereits im formgebenden Werkzeug Beta-, Gamma-, Röntgen-, UV- oder Elektronenstrahlung ausgesetzt wird.

Verfahren zur Herstellung von hydrolysestabilen Formkörpern, dadurch gekennzeichnet, dass der Formkörper nach einem weiteren Vorbehandlungsschritt wie z.B. Temperung oder/und Konditionierung mit Wasser oder anderen Medien Beta-,Gamma-, Röntgen-, UV- oder Elektronenstrahlung ausgesetzt wird.

Verfahren zur Herstellung von hydrolysestabilen Formkörpern, dadurch gekennzeichnet, dass der Formkörper nach der Formgebung nur partiell Beta-, Gamma-, Röntgen-, UV- oder Elektronenstrahlung ausgesetzt wird.

Zusammengesetzte Formkörper, dadurch gekennzeichnet, dass mindestens ein Teil des Formkörpers nach der Formgebung Beta-, Gamma-, Röntgen-, UV- oder Elektronenstrahlung ausgesetzt wurde.

Formkörper, dadurch gekennzeichnet, dass sie in elektrischen Steckverbindungen oder Teilen davon eingesetzt werden.

Formkörper, dadurch gekennzeichnet, dass sie in elektrischen Steckverbindungen oder Teilen davon eingesetzt werden.

### Beispiele

Folgende Produkte wurden in den Beispielen verwendet:
PA6, Durethan B30F der Bayer AG, Leverkusen, Deutschland, relative Viskosität η_{rel.} = 3,0, 0,5 Gew.-%-ige Lösung in *m*-Kresol
PA66, Ultramid A3 der BASF AG, relative Viskosität η_{rel.} = 3,0, 0,5 Gew.-%-ige Lösung in *m*-Kresol
Glasfaser CS 7928 der Bayer AG, Leverkusen, Deutschland
Betalink-Master IC/W65PA6 der Firma PTS Marketing und Vertriebs-GmbH, Tauberzell, Deutschland

Als Additive wurden übliche Nukleierungsmittel und Entformungsmittel verwendet.

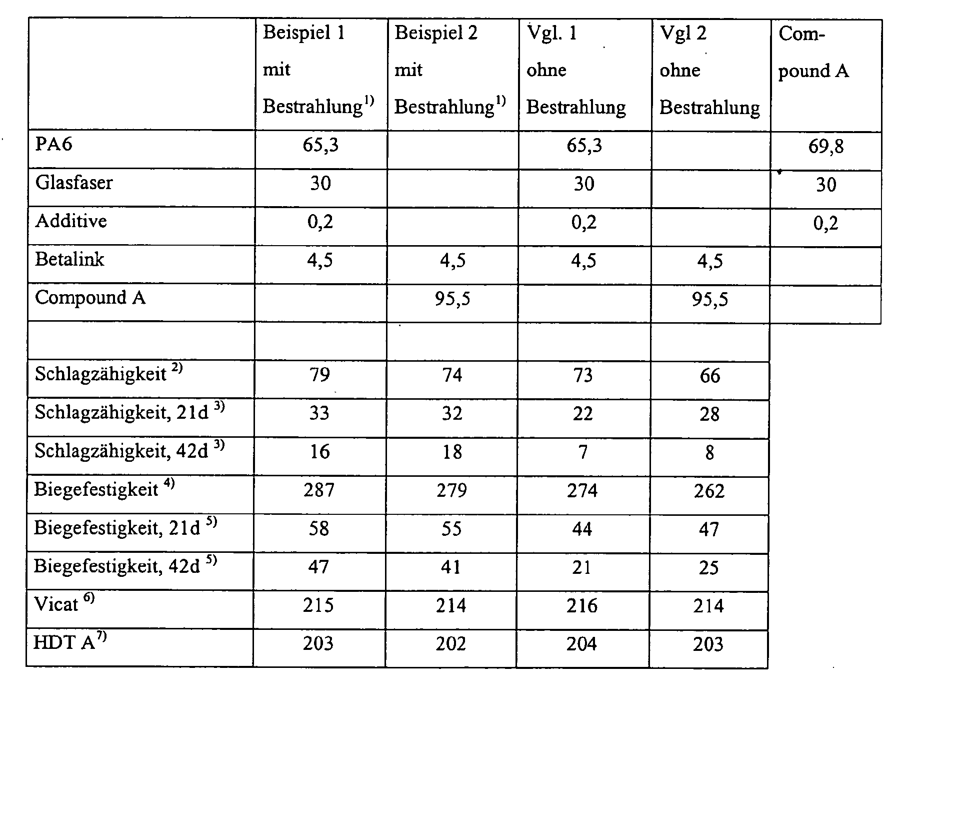

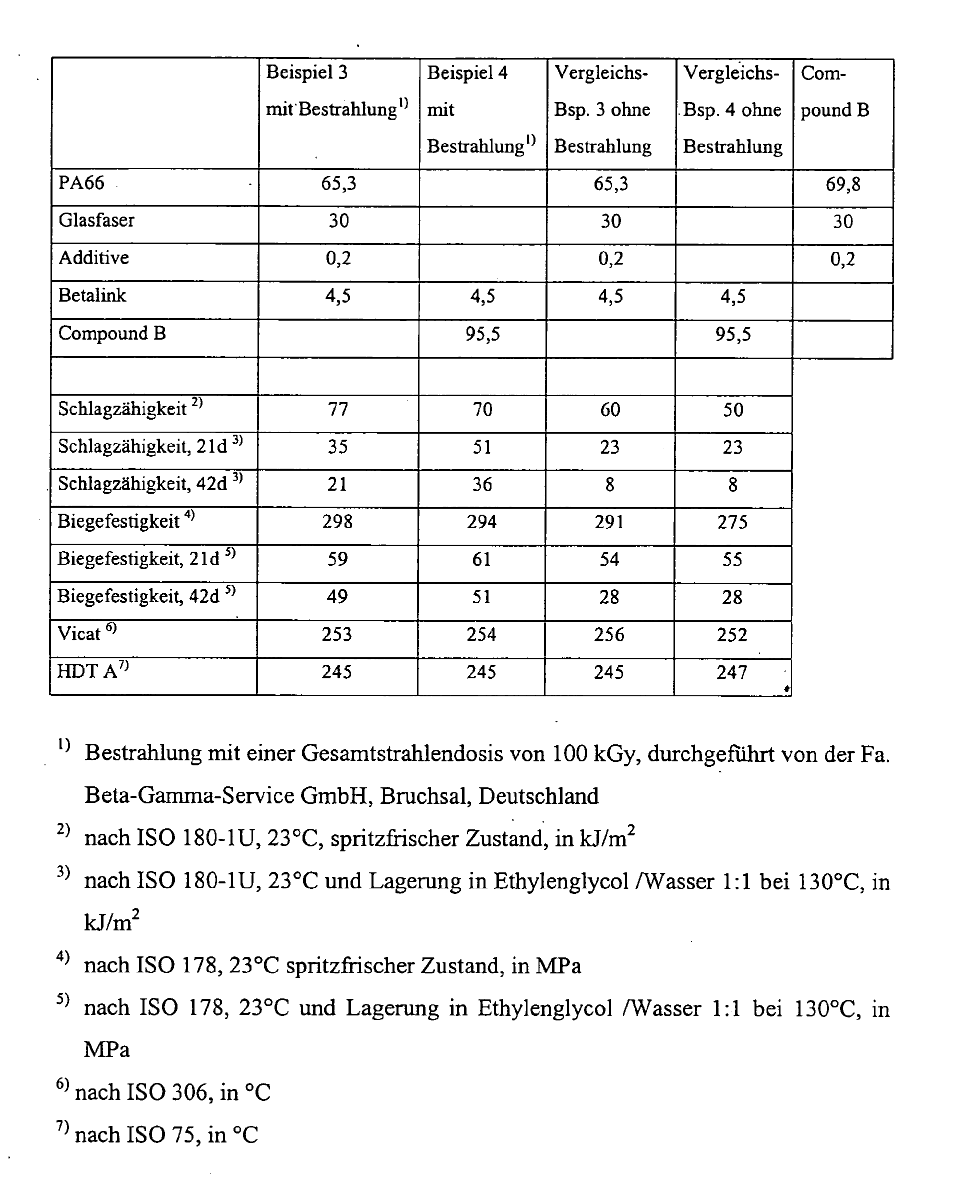

## Patentansprüche

1. Verwendung von Formmassen zur Herstellung von hydrolysestabilen Formkörpern, wobei die Formmassen ein zur Vernetzung fähiges Additiv und /oder ein thermoplastisches, olefinisch ungesättigtes Polykondensat enthalten und die Formkörper nach der Formgebung mit energiereicher Strahlung wie zum Beispiel Beta-, Gamma-, Röntgen-, UV- oder Elektronenstrahlung behandelt werden.

2. Verwendung von Formmassen zur Herstellung von hydrolysestabilen Formteilen, wobei die Formmassen die folgenden Komponenten enthalten
A) thermoplastisches Polykondensat
B) Verstärkungsstoffe
C) vernetzungsfähiges Additiv
D) weitere polymere Komponenten
E) Additive, Zusatzstoffe, Verarbeitungshilfsmittel
und deren Polymermatrix im Anschluss an die thermoplastische Formgebung mit Beta-, Gamma-, Röntgen-, UV- oder Elektronenstrahlung, vorzugsweise mit Betastrahlen der Energie 10-2000 kGy bestrahlt werden.

3. Verwendung gemäß Anspruch 1, wobei die Formmassen enthalten:
A) 30 - 99,9 % thermoplastisches Polykondensat
B) 0 - 60 % Verstärkungsstoffe
C) 0,1 - 20 % Vernetzungshilfsmittel
D) 0 - 30 % weitere polymere Zusatzstoffe
E) 0 - 15 % Zusatzstoffe und/oder Verarbeitungshilfmittel.

4. Verwendung gemäß einem oder mehreren der vorangegangenen Ansprüche, **dadurch gekennzeichnet, dass** als thermoplastisches Polymer A) Polyamid oder Mischungen aus verschiedenen Polyamiden eingesetzt werden.

5. Verwendung gemäß einem oder mehreren der vorangegangenen Ansprüche, **dadurch gekennzeichnet, dass** als thermoplastisches Polymer Polyester oder Mischungen aus verschiedenen Polyestern eingesetzt werden.

6. Verwendung gemäß einem oder mehreren der vorangegangenen Ansprüche, **dadurch gekennzeichnet, dass** als Vernetzungshilfsmitteln Verbindungen enthaltend ungesättigte Gruppen, bevorzugt Allyl- und/oder Vinyl- Gruppen eingesetzt werden.

7. Formkörper, hergestellt gemäß einem oder mehrerer der vorangegangenen Ansprüche.

8. Verwendung der Formkörper gemäß einem oder mehreren der vorstehenden Ansprüche als medienführendes System, wobei als Medium bevorzugt Kühlmittel auf Wasser und/oder Ethylenglycol-Basis zu verstehen sind und als medienführendes System bevorzugt Behältnisse und Leitungen zu verstehen sind.

9. Verwendung der Formkörper gemäß einem oder mehreren der vorstehenden Ansprüche als Kühlmittelleitungen, Kühlerwasserkästen, Kühlmittelausgleichsbehälter, Pumpengehäuse, Pumpenlaufräder und Kühlwasserverteiler sowie Thermostatgehäuse.

10. Verwendung der Formkörper gemäß einem oder mehreren der vorstehenden Ansprüche als medienführendes System, wobei als Medium Öl, bevorzugt Motoröl und Getriebeöl verstehen sind und als medienführendes System bevorzugt Behältnisse und Leitungen zu verstehen sind.

11. Verwendung der Formkörper gemäß einem oder mehreren der vorstehenden Ansprüche als Bestandteil einer elektrischen Steckerverbindung, bevorzugt in Sicherungen, Sicherungskästen, Relais, Airbag-Steckverbindungen oder Bremssensoren für Kfz-Antiblockiersysteme.

12. Verfahren zur Herstellung von hydrolysestabilen Formkörpern gemäß einem oder mehreren der vorstehenden Ansprüche, **dadurch gekennzeichnet, dass** der Formkörper nach der Formgebung Beta-, Gamma-, Röntgen-, UV- oder Elektronenstrahlung ausgesetzt wird.
